# EUROPÄISCHE PATENTSCHRIFT

(11) **EP 0 777 393 B1**
(45) Veröffentlichungstag und Bekanntmachung des Hinweises auf die Patenterteilung: **30.05.2001**
(21) Anmeldenummer: 96119299.4
(22) Anmeldetag: 02.12.1996
(51) Int. Cl.: H04N 13/04

(54) **Verfahren und Vorrichtung zur Überlagerung von Stereo-Videobildern**
Method and apparatus for the superposition of stereoscopic video images
Procédé et appareil pour superposer des images vidéo stéréoscopiques

(30) Priorität: 05.12.1995 DE 19545356
(43) Veröffentlichungstag der Anmeldung: 04.06.1997
(73) Patentinhaber: Deutsche Telekom AG, 53113 Bonn (DE)
(72) Erfinder: Petzold, Jürgen, 80469 München (DE); Larice, Robert, 85646 Anzing (DE); Ernst, Hartmut, Dr., 83022 Rosenheim (DE)
(74) Vertreter: Flach, Dieter Rolf Paul, Dipl.-Phys.

(56) Entgegenhaltungen:
- EP-A- 0 537 945
- US-A- 5 142 642

## Beschreibung

Die Erfindung betrifft eine Vorrichtung zur Überlagerung von Stereo-Videobildern.

Es sind verschiedene Verfahren bekannt, stereografische Videobilder räumlich darzustellen. Bei den meisten Methoden wird der räumliche Bildeindruck dadurch erzeugt, dass dem linken und dem rechten Auge des Betrachters unterschiedliche Teilbilder gezeigt werden, die sich dadurch unterscheiden, dass zwischen den in den beiden Teilbildern sichtbaren Objekten eine tiefenabhängige Disparität besteht.

Bei einer häufig zur Wiedergabe von Stereobildern verwendeten Methode wird dafür gesorgt, dass das linke und das rechte Teilbild unterschiedlich polarisiert sind.

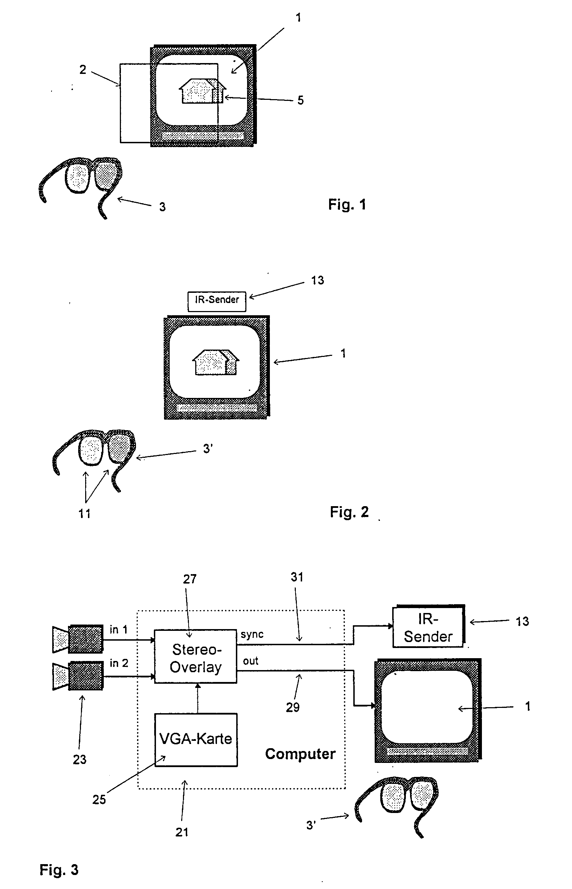

Wie anhand von Figur 1 dargestellt ist, kann dies dadurch erreicht werden, dass beispielsweise vor dem Monitor 1 ein bildschirmfüllender LC-Shutter 2 angebracht wird, der synchron mit dem Bildwechsel nur für horizontal bzw. vertikal (oder auch linkszirkular bzw. rechtszirkular) polarisiertes Licht durchlässig geschaltet ist. Für die Beobachtung ist dann eine Polarisations-Brille 3 mit entsprechend unterschiedlich polarisierten Gläsern erforderlich. Dadurch lässt sich dann ein Stereo-Videobild 5 auf dem Monitor oder Fernseher 1 betrachten.

Anstelle eines Monitors 1 können auch zwei Video-Projektoren verwendet werden, wobei durch vor den Projektoren angebrachte Polarisationsfilter - vergleichbar dem LC-Shutter 1 in dem bekannten Ausführungsbeispiel nach Figur 1 - eine unterschiedliche Polarsisation des linken und des rechten Teilbildes erzielbar ist. Für die Beobachtung ist wie beim Monitor-Shutter-Verfahren gemäß Figur 1 lediglich eine passive Brille mit entsprechend unterschiedlich polarisierten Gläsern erforderlich.

Eine weitere bekannte Methode ist das Shutter-Brillen-Verfahren, welches anhand von Figur 2 dargestellt ist.

Dabei wird ein Monitor oder ein Projektor 1 verwendet, der das linke und das rechte Teilbild in schnellem Wechsel zeigt. Um den Stereo-Effekt sichtbar zu machen, wird nunmehr dafür gesorgt, dass das linke Auge nur das linke und das rechte Auge nur das rechte Teilbild sieht. Der Beobachter muß dazu eine Shutter-Brille 3' tragen. Diese verfügt über LC-Gläser 11, die im Takt des Bildwechsels durchsichtig und undurchsichtig geschaltet werden. Es handelt sich also um eine aktive Brille, die aufgrund der Funktion der Brille größer, schwerer und teurer als eine passive Polarisationsbrille ausfällt und zudem entweder drahtgebunden ist oder über einen Sender angesteuert wird, wobei insbesondere bei einer drahtlosen mittels Sender und Empfänger arbeitenden Ansteuerung ferner eine Batterie für die Brille vorgesehen sein muss. Auch die Synchronisation mit dem Bildwechsel muss aktiv erfolgen, also über ein Kabel oder - was wesentlich bequemer ist - mit Hilfe eines Senders, beispielsweise eines Infrarot-Senders 13.

Zur Vermeidung des Bildflimmerns wird häufig auch noch die Bildfrequenz verdoppelt, was jedoch eine schneller schaltende Shutter-Brille erforderlich macht.

Bei Verwendung von Monitoren wird die zuletzt genannte Methode am häufigsten eingesetzt, da nur ein Standard-Monitor benötigt wird. Anders als bei der Eingangs erläuterten Polarisations-Methode mit linear polarisiertem Licht ist der Stereo-Effekt unabhängig von der Kopfneigung und vom Standort des Betrachters. Es können von daher auch mehrere Beobachter gleichzeitig teilnehmen und das Bildflimmern kann durch Frequenzverdopplung reduziert werden.

Bei den erläuterten und einigen weiteren ebenfalls bekannten Verfahren werden also immer aus zwei Teilbildern ein Stereobild erzeugt.

Aus der EP-A-0 537 945 ist beispielsweise eine Vorrichtung als bekannt zu entnehmen, bei welcher ein mittels eines Computers erzeugtes Bild mit einem Realbild überlegt wird. Eine Stereoüberlagerungsschaltung wird nicht beschrieben. Dort ist lediglich zu entnehmen, dass ein linker zu einem rechten Kanal identisch aufgebaut ist und beide Kanäle synchron laufen.

Aus der US-A-5,142,642 ist demgegenüber ein stereoskopisches Fernsehsystem zu entnehmen, bei welchem noch mehr als zwei Eingänge verwendet werden, und bei dem ferner über Korrelationsverfahren Abweichungen zwischen den verschiedenen Videobildern errechnet werden sollen.

Demgegenüber ist es Aufgabe der vorliegenden Erfindung eine verbesserte Vorrichtung zu schaffen, mittels derer Stereo-Videobilder in einem Videobasisbild eingeblendet oder überlagert werden können.

Die Aufgabe wird entsprechend den im Anspruch 1 angegebenen Merkmalen gelöst. Vorteilhafte Ausgestaltungen der Erfindung sind in den Unteransprüchen angegeben.

Mittels der vorliegenden Erfindung wird es nunmehr erstmals möglich, ein Stereobildpaar in ein weiteres Videobild, insbesondere ein Computer-Grafik-Bild - nachfolgend zum Teil auch Basisbild genannt - einzublenden bzw. dieses zu überlagern. Dabei kann das Video- oder Basisbild ebenfalls stereografisch sein. Es sind also drei Videoquellen erforderlich, nämlich je eine Quelle für das linke Stereo-Teilbild, das rechte Stereo-Teilbild sowie das Basisbild, welchem das Stereobild überlagert werden soll. Im Falle eines Stereo-Basisbildes sind zudem neben der einen Quelle für das linke Stereo-Teilbild sowie einer Quelle für das rechte Stereo-Teilbild zwei weitere Quellen für das linke und das rechte Stereo-Basisbild erforderlich.

Die Einblendung bzw. Überlagerung kann auf verschiedene Arten geschehen. Möglich ist ein "Einstanzen" eines rechteckigen Bildausschnittes, ein Mischen der Stereo-Teilbilder mit dem Basisbild (und im Fall eines stereografischen Basisbildes durch Mischen der Stereo-Teilbilder mit dem Basisbild), oder das Definieren einer "durchsichtigen" Farbe aus der Palette des Basisbildes (Chroma/Luma-Keying). Bei Verwendung des Keying sind nicht nur rechteckige, sondern beliebige geometrische Einblendfenster realisierbar. Im Extremfall kann das überlagerte Bild auch das gesamte Basisbild überdecken. Das erläuterte Verfahren kann sowohl im digitalen als auch im analogen Verarbeitungskanal erfolgen.

Gemäß einer Ausführungsform der Erfindung ist es bei reduzierter Ortsauflösung möglich, dass die beiden Stereo-Teilbilder auch als gerades und ungerades Halbbild von einer interlaced Videoquelle (also eine Videoquelle, die die Bilder nach Art von zwei Halbbildern zusammensetzt) z.B. in Form eines Standard-Videorekorders zugespielt werden. Möglich ist es aber ebenso, dass als Quellen gespeicherte Bilder verwendet werden, die beispielsweise auf einer mittels Laser lesbaren Disk (CD) oder einer Festplatte eines Computers vorliegen.

In einer bevorzugten Ausführungsform der Erfindung ist vorgesehen, dass beispielsweise die von zwei synchron arbeitenden Videokameras stammenden Stereo-Teilbilder einer Computer-Graphik überlagert werden.

Mittels der Erfindung ist also die Überlagerung, Einblendung und Mischung von Stereobildern mit einem Nicht-Stereo-Basisbild oder einem stereografischen Basisbild möglich. Die Umsetzung und die Art der Visualisierung kann dabei mittels grundsätzlich bekannter Methoden erfolgen. Von daher können zur gemeinsamen Darstellung beispielsweise einer Computer-Graphik mit eingeblendeten Stereobildern die eingangs erläuterten Standard-Verfahren dienen, welche unter Verwendung von Shutter-Brillen oder Polarisationsbrillen arbeiten. Daneben sind aber genauso auch neuere, autostereoskopische Anzeigeeinrichtungen (Displays) einsetzbar.

Die Erfindung weist insbesondere folgende Vorteile auf:
- Alle drei Quellen (im Falle eines Stereo-Basisbildes alle vier Quellen) können sowohl Standbilder als auch Bewegtbilder sein.
- Für die Stereo-Teilbilder können Halb- aber auch zwei Vollbilder verwendet werden, was wegen der höheren örtlichen Auflösung den Bildeindruck wesentlich verbessert.
- Eine weitere Verbesserung läßt sich dadurch realisieren, dass die Halbbilder mit Hilfe einer gefilterten Interpolation auf Vollbilder konvertiert werden.
- Die eingeblendeten Stereobilder können in ihrer Größe frei variiert werden.
- Der Ort der Einblendung des Stereobildes im Basis-bild (oder in den Stereo-Basisbildern) kann frei gewählt werden.
- Die Einblendung kann dabei durch Mischen mit dem Basisbild im digitalen oder analogen Verarbeitungskanal umgesetzt werden.
- Mittels sog. Look-Up-Tabellen ist eine digitale Gamma-Korrektur sowie eine Falschfarbendarstellung möglich.

Die Erfindung wird nachfolgend anhand eines Ausführungsbeispiels näher erläutert. Dabei zeigen im einzelnen
- Figur 1 :: eine schematische Darstellung des Monitor-Shutter-Verfahrens nach dem Stand der Technik, bei welchem eine Kanaltrennung durch einen großen, vor dem Monitor angebrachten Plarisations-Shutter in Verbindung mit passiven Polarisationsbrillen erreichbar ist;
- Figur 2 :: eine schematische Darstellung eines bekannten Shutter-Brillen-Verfahrens, bei welchem eine Kanaltrennung durch Verwendung aktiver Shutter-Brillen erreichbar ist;
- Figur 3 :: eine schematische Darstellung einer erfindungsgemäßen Vorrichtung zur Erzeugung von Stereo-Überlagerungs-Bildern; und
- Figur 4 :: ein Prinzipschaltbild eines Schaltplans für eine erfindungsgemäße Vorrichtung.

Anhand von Figur 3 ist ein Prinzipschaltbild über den grundsätzlichen Aufbau einer erfindungsgemäßen Vorrichtung gezeigt.

Bei dem Ausführungsbeispiel gemäß Figur 3 wird ein Basis-bild mittels einer Basis-Videoquelle 21, im gezeigten Ausführungsbeispiel mittels eines Computers erzeugt.

Das Stereobild wird mittels einer Stereo-Quelle 23, im gezeigten Ausführungsbeispiel mittels einer Stereo-Kamera aufgenommen. Die Bilder werden mittels eines Computers 21 verarbeitet, der im gezeigten Ausführungsbeispiel gleichzeitig auch zur Erstellung des erwähnten Basis-Videobildes dient.

Das im Computer 21 über eine VGA-Karte 25 bereitgestellte Basis-Videobild wird einer Stereo-Überlagerungsschaltung 27 zugeführt. In dieser Stereo-Überlagerungsschaltung 27 werden die beiden Stereo-Quellbilder mit dem vom Computer 21 erzeugten Basis-Bild überlagert und über einen Ausgang 29 dem nachgeschalteten Monitor 1 zugeführt.

Über eine Synchronisationsleitung 31 wird dazu ein in der Regel im Bereich des Monitors aufgestellter Infrarot-Sender 13 angesteuert, worüber nunmehr eine im gezeigten Ausführungsbeispiel aktiv arbeitende Shutter-Brille 3' angesteuert wird, wie dies grundsätzlich anhand des von Figur 2 dargestellten bekannten Verfahrens erfolgt.

Mittels dieses Verfahrens können dann in einem vom Computer erstellten Basisbild die von der aus zwei Videokameras bestehenden Stereo-Quelle 23 live aufgenommenen Stereobilder eingeblendet bzw. überlagert werden.

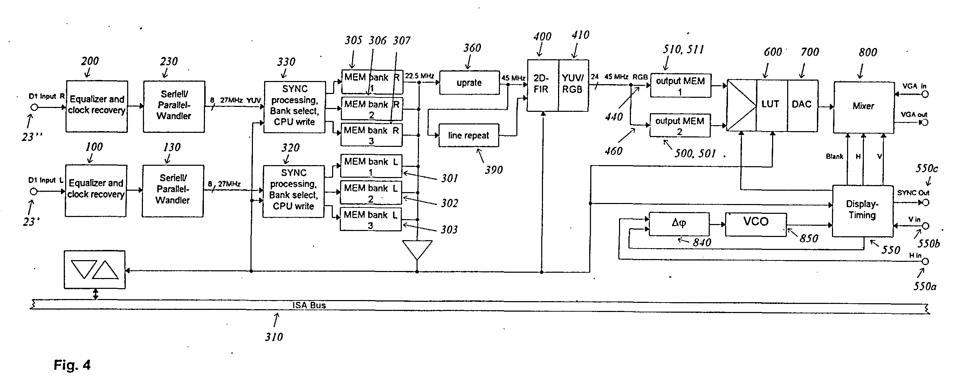

Anhand von Figur 4 wird ein ensprechendes Prinzipschaltbild erläutert.

Das Ausführungsbeispiel gemäß Figur 4 wird für den Fall erläutert, dass die beiden Stereoquellen 23 den digitalen seriellen D1-Standard unterstützen und alternativ über einen Bus eines Host-Rechners zur Verfügung gestellt werden. Die Grafik-Information der Basis-Videoquelle werden über einen Standard-VGA-Stecker analog zugeführt. Dabei wird der Feature-Connector der Grafik-Karte nicht verwendet.

Bei dem Prinzipschaltbild gemäß Figur 4 stehen die beiden Bilder der Stereo-Quelle 23 an den beiden Eingängen 23' und 23" an, wobei am Eingang 23' die Daten beispielsweise für das linke und am Eingang 23" die Daten für das rechte Bild der Stereo-Quelle der Schaltung zugeführt werden.

Aus dem seriellen digitalen Datenstrom werden zunächst in den IC's 100 und 200 für das linke wie das rechte Stereo-Quellbild die Synchronisationssignale abgetrennt. Beiden IC's 100 und 200 ist jeweils ein seriell-parallel-Wandler 130, 230 nachgeschaltet. Dadurch wird ein YUV-Datenstrom mit 27 MHz Pixelrate erzeugt.

Anschließend werden in einer Synchronisationsschaltung 320, 330 entsprechend den Synchronisations-Signalen die Halbbilder in Speicher-Bänke 301 und 302 und Speicher-Bänke 305, 306 jeweils getrennt für den linken und rechten Kanal verteilt. Die ferner noch vorgesehenen Speicher-Bänke 303 bzw. 307 für den linken und rechten Kanal werden als Zwischenspeicher für den asynchron mit 22,5 MHz erfolgenden Auslesevorgang benötigt.

Ferner wird über die Synchronisationsschaltung 320 und 330 die Bildübertragung zum Host-Rechner über einen Bus 310 gesteuert (Frame-Grabber- und Load-Function).

Beim Auslesen der Speicher-Bänke 301 bis 303 und 305 bis 307 werden nun die beiden Kanäle entsprechend den beiden Videobildern des Stereobildes zu einem Datenstrom zusammengefasst, wobei eine Verdopplung der Datenrate von 22,5 MHz auf 45 MHz erfolgt. Dazu ist ein Zeilenvervielfacher 360 vorgesehen.

Dem Ausgang des Zeilenvervielfachers 360 ist ein Zeilenwiederholer 390 als Zwischenpuffer nachgeschaltet. Die in dem Zeilenspeicher 390 zwischengespeicherte Zeile wird in dem nachfolgend vorgesehenen FIR-Filter 400 für die Skalierung benötigt.

Dem FIR-Filter 400 ist ein Konverter 410 nachgeschaltet, in dem eine YUV/RGB-Konvertierung stattfindet. Der FIR-Filter 400 und der Konverter 410 können auch zu einer Stufe zusammengefasst sein.

Anschließend werden die beiden Kanäle wieder in zwei Pfade 440, 460 aufgeteilt, die zu Ausgabe-Bildspeichern 500 und 501 für den linken und 510, 511 für den rechten Kanal führen. Den beiden Ausgängen der Ausgabe-Bildspeicher 500, 501 und 510, 511 ist eine Look-Up-Tabelle 600 mit zwei entsprechenden mit den Ausgabe-Bildspeichern verbundenen Eingängen nachgeschaltet, mit der eine Echtzeitmanipulation an den digitalen Video-Informationen vorgenommen werden kann. Damit lässt sich z.B. eine Gammakorrektur einstellen oder eine Pseudo-Farbdarstellung realisieren.

Der Look-Up-Tabelle 600 ist ein Digital-Analog-Wandler 700 nachgeschaltet, der mit der Look-Up-Tabelle 600 auch zu einem gemeinsamen Baustein zusammengefasst werden kann.

In einem letzten Schritt wird schließlich in einem diskret aufgebauten Mischer 800 die analoge Grafik-Information von der VGA-Karte mit der Bildinformation gemischt. Die Steuerung des Mischvorganges erfolgt dabei durch einen Timing-Generator 550. Darüber können insbesondere die Lage und die Größe des Bildausschnittes eingestellt werden. Der Timing-Generator 550 dient ferner für die Erzeugung des Synchronisations-Signals zur Steuerung der Shutter-Brille 3' (Figur 3). Der Timing-Generator 550 weist ferner einen weiteren Eingang 550a für die H-Signale und einen Eingang 550b für die V-Signale der in Figur 4 nicht weiter gezeigten Grafikkarte auf, die als Referenz für die Ausgabe-Zeitsteuerung dient. Für die Regelung werden ein Phasenkomparator 840 und ein VCO 850, also ein spannungsgesteuerter Oszillator, verwendet.

Schließlich ist in Figur 4 auch angedeutet, dass der Timing-Generator 550 einen weiteren Ausgang 550c aufweist, an welchem ein Synchronisations-Ausgangssignal ansteht, welches zur Synchronisation des in Figur 3 dargestellten Infrarot-Senders 13 zur Ansteuerung der Shutter-Brille 3' benötigt wird.

Auch wenn abweichend vom gezeigten Ausführungsbeispiel als Basis-Videoquelle ein Stereobild verwendet wird, so ändert sich dadurch der grundsätzliche Aufbau der vorstehend erläuterten Schaltung nicht.

## Patentansprüche

1. Vorrichtung zur Darstellung von Stereo-Videobildern mittels Monitoren, Projektoren (1), insbesondere unter Verwendung einer Shutter-Brille (3') oder eines die Betrachtungsfläche des Monitors (1) oder eines Projektionsbildes überdeckenden Shutters (1) und einer diesem zugeordneten passiven Polarisations-Brille (3), mit den folgenden Merkmalen
- mit zwei Videoquellen-Eingängen (23'; 23") zur Verarbeitung der Bilddaten eines Stereobildes,
- mit einer den Videoquellen-Eingängen nachgeordneten Signalprozessoreinrichtung (320, 330),
- mit einer Kombinationsstufe, der zum einen die Bilddaten des Stereobildes und zum anderen stereobildverändernde Signaldaten zuführbar sind,
- die stereobildverändernden Signaldaten bestehen aus Bilddaten weiterer Videobilder, insbesondere aus Computer-Graphik-Bildern,
- es ist zumindest ein weiterer Videoquellen-Eingang (550a, 550b, 550c) zur Bildverarbeitung des weiteren Videobildes vorgesehen,
- die Kombinationsstufe besteht aus einem Mischer (800), in welchem die Bilddaten des Stereobildes und die Bilddaten des weiteren Videobildes mischbar sind,
- es ist ein Timing-Generator (550) vorgesehen, worüber der Mischer (800) ansteuerbar ist,
- mittels des Timing-Generators (550) ist die Lage und die Größe eines Einblendfensters zur Darstellung des Stereobildes im weiteren Videobild einstellbar, und
- in dem Mischer (800) sind die Bilddaten des weiteren Videobildes und des darin im Einstellfenster eingeblendeten oder überlagerten Stereobildes zur Wiedergabe eines Komplettbildes mischbar.

2. Vorrichtung nach Anspruch 1, **dadurch gekennzeichnet,** dass der Timing-Generator (550) zwischen den Videoeingängen zur Zuführung des weiteren Videobildes und den für die Verarbeitung des weiteren Videobildes vorgesehenen Eingängen des Mischers (800) zwischengeschaltet ist.

3. Vorrichtung nach Anspruch 1 oder 2, **dadurch gekennzeichnet,** dass das weitere Videobild ebenfalls aus einem Stereobild besteht.

4. Vorrichtung nach einem der Ansprüche 1 bis 3, **dadurch gekennzeichnet,** dass der Mischstufe (800) in dem die Daten des Stereobildes verarbeitenden Signalzweig eine Look-Up-Tabellen-Einrichtung (600) zur Durchführung von Echtzeitmanipulationen an den Stereo-Quellbildern, insbesondere zur Durchführung einer Gamma-Korrektur und/oder einer Pseudo-Farbdarstellung vorgeschaltet ist.

5. Vorrichtung nach Anspruch 4, **dadurch gekennzeichnet,** dass der Look-Up-Tabellen-Einrichtung (600) ein Digital-Analog-Konverter (700) nachgeschaltet oder in der Look-Up-Tabellen-Einrichtung (600) integriert ist.

6. Vorrichtung nach einem der Ansprüche 1 bis 5, **dadurch gekennzeichnet,** dass die Daten des weiteren Videobildes zeitgesteuert dem Mischer (800) zuführbar sind.

7. Vorrichtung nach Anspruch 6, **dadurch gekennzeichnet,** dass der Zeitsteuerung in dem Timing-Generator (550) die H- und V-Signale des weiteren Videobildes über eine Graphikkarte zuführbar sind, wobei die H- und V-Signale der Graphikkarte als Referenz für die Ausgabe-Zeitsteuerung im Mischer (800) dienen.

8. Vorrichtung nach einem der Ansprüche 6 oder 7, **dadurch gekennzeichnet,** dass zur Ansteuerung des Zeitgenerators (550) ein Phasenkomparator (840) und ein spannungsgesteuerter Oszillator (850) vorgesehen sind.

9. Vorrichtung nach einem der Ansprüche 1 bis 8, **dadurch gekennzeichnet,** dass für jeden Kanal und damit für jedes Teilbild des Stereo-Quellbildes zumindest zwei Speicher-Bänke (301, 302; 305, 306) vorgesehen sind, in welche die Bilddaten kanalselektiv zwischenspeicherbar sind.

10. Vorrichtung nach Anspruch 9, **dadurch gekennzeichnet,** dass für jeden Kanal noch jeweils zumindest eine dritte Speicher-Bank (303, 307) als Zwischenspeicher für den asynchron erfolgenden Auslesevorgang vorgesehen ist.

11. Vorrichtung nach Anspruch 9 oder 10, **dadurch gekennzeichnet,** dass die Ausgänge der Speicher-Bänke (301 bis 307) zusammengefasst sind.

12. Vorrichtung nach einem der Ansprüche 9 bis 11, **dadurch gekennzeichnet,** dass den Speicherbänken (301 bis 307) ein Zeilenvervielfacher nachgeschaltet ist.

13. Vorrichtung nach einem der Ansprüche 9 bis 12, **dadurch gekennzeichnet,** dass den Speicher-Bänken (301 bis 307) vorzugsweise kanalselektiv jeweils eine separate Synchronisationsstufe (320, 330) vorgeschaltet ist, die über einen Bus mit einem Host-Rechner verbindbar- und darüber ansteuerbar ist.

## Claims

1. A device for the representation of stereovideo images by means of monitors, projectors (1) and more particularly a shutter spectacles device (3') or a shutter (1) covering the observed face of the monitor (1) or of a projected image, and a passive polarizing spectacles device (3) associated with same, having the following features:
- two video source inputs (23'; and 23") for processing the image data of a stereo image,
- a signal processor means (320 and 330) placed on the output side of said video source inputs,
- a combination stage, to which on the one hand the image data of the stereo image and on the other hand stereo image modifying signal data may be supplied,
- the stereo image modifying signal data comprise image data of further video images, more especially computer graphics images,
- at least one further video source input (550a, 550b and 550c) is provided for signal processing of the further video image,
- the combination stage comprises a mixer (800), in which the image data of the stereo image and the image data of the further video image may be mixed,
- a timing generator (550) is provided, by way of which the mixer (800) may be controlled,
- by means of the timing generator (550) the position and the size of a merge-in window for the representation of the stereo image may be set in the further video image and
- in the mixer (800) the image data of the further video image and of the stereo image merged therein in the setting window or superimposed therein may be mixed for the reproduction of a complete image.

2. The device as set forth in claim 1, characterized in that the timing generator (550) is connected between the video inputs for the supply of the further video image and the inputs of the mixer (800) provided for the processing of the further video image.

3. The device as set forth in claim 1 or in claim 2, characterized in that the further video image also comprises a stereo image.

4. The device as set forth in any one of the claims 1 through 3, characterized in that mixing stage (800) in the signal path processing the data of the stereo image is connected with the output of a look-up table means (600) for the performance of real time manipulations on the stereo source images, more particularly for the performance of gamma correction and/or a pseudo color representation.

5. The device as set forth in claim 4, characterized in that the output of the look-up table means (600) is connected with the output of a digital/analog converter (700) is integrated in the look-up table means (600).

6. The device as set forth in any one of the claims 1 through 5, characterized in that the data of the further video image are able to be supplied in a timed manner to the mixer (800).

7. The device as set forth in claim 6, characterized in that the timing control in the timing generator (550) is arranged to have supplied to it the H- and V-signals of the further video image by way of a graphics board, the H- and V-signals of the graphic board serving as a reference for the output timing control in the mixer (800).

8. The device as set forth in the claim 6 or claim 7, characterized in that for the control of the timing generator (550) a phase comparator (840) and a voltage controlled oscillator (850) are provided.

9. The device as set forth in any one of the claims 1 through 8, characterized in that for each channel and accordingly for each image part of the stereo source image at least two memory banks (301, 302; 305 and 306) are provided, in which the image data are able to be intermediately stored in a channel selective manner.

10. The device as set forth in claim 9, characterized in that for each channel at least a third memory bank (303 and 307) is provided as an intermediate memory for the asynchronously occurring reading operation.

11. The device as set forth in claim 9 or in claim 10, characterized in that the outputs of the memory banks (301 to 307) are collected together.

12. The device as set forth in any one of the claims 9 through 11, characterized in that a line multiplier is connected on the output side of the memory banks (301 through 307).

13. The device as set forth in any one of the claims 9 through 12, characterized in that a respective separate synchronizing stage (320 and 330) is connected on the input side of the memory banks (301 through 307) preferably in a channel selective fashion, such stage being able to be connected using a bus with a host computer and controlled via same.

## Revendications

1. Dispositif pour la représentation d'images vidéo stéréo au moyen d'écrans, de projecteurs (1), en particulier par utilisation de lunettes à obturateur (shutter) (3') ou d'un obturateur (1) qui couvre la surface d'observation de l'écran (1) ou d'une image projetée et de lunettes de polarisation passives (3) associées à cet obturateur, comprenant les éléments suivants :
- deux entrées de source vidéo (23'; 23") pour le traitement des données d'une image stéréo,
- un dispositif de traitement de signaux (320, 330) agencé à la suite des entrées de source vidéo,
- un étage de combinaison auquel peuvent être amenées d'une part les données de l'image stéréo et d'autre part des données de signaux modifiant l'image stéréo,
dans lequel :
- les données de signaux modifiant l'image stéréo sont constituées par des données d'autres images vidéos, en particulier d'images graphiques produites par ordinateur,
- il est prévu au moins une autre entrée de source vidéo (550a, 550b, 550c) pour le traitement de l'autre image vidéo,
- l'étage de combinaison est constitué par un mélangeur (800) dans lequel les données de l'image stéréo et les données de l'autre image vidéo peuvent être mélangées,
- il est prévu un générateur de synchronisation (550) via lequel le mélangeur (800) peut être piloté,
- au moyen du générateur de synchronisation (550), on peut régler la position et la taille d'une fenêtre encastrée pour représenter l'image stéréo dans l'autre image vidéo, et
- dans le mélangeur (800), on peut mélanger les données de l'autre image vidéo et de l'image stéréo encastrée ou superposée dans la fenêtre encastrée dans ladite image vidéo, afin de restituer une image complète.

2. Dispositif selon la revendication 1, caractérisé en ce que le générateur de synchronisation (550) est interposé entre les entrées vidéos pour amener l'autre image vidéo et les entrées du mélangeur (800) prévues pour le traitement de l'autre image vidéo.

3. Dispositif selon l'une ou l'autre des revendications 1 et 2, caractérisé en ce que l'autre image vidéo est également constituée par une image stéréo.

4. Dispositif selon l'une quelconque des revendications 1 à 3, caractérisé en ce qu'en amont de l'étage mélangeur (800), dans la branche de signaux traitant les données de l'image stéréo, est prévu un dispositif à consultation de tableaux (600) pour effectuer des manipulations en temps réel sur les images de source stéréo, en particulier pour effectuer une correction gamma et/ou une représentation en pseudo-couleurs.

5. Dispositif selon la revendication 4, caractérisé en ce qu'un convertisseur numérique/analogique (700) est prévu à la suite du dispositif à consultation de tableaux (600), ou intégré dans celui-ci.

6. Dispositif selon l'une quelconque des revendications 1 à 5, caractérisé en ce que les données de l'autre image vidéo peuvent être amenées au mélangeur (800) de façon commandée dans le temps.

7. Dispositif selon la revendication 6, caractérisé en ce que les signaux H et V de l'autre image vidéo peuvent être amenés à la commande temporelle dans le générateur de synchronisation (550) via une carte graphique, les signaux H et V de la carte graphique servant de référence pour la commande temporelle de distribution dans le mélangeur (800).

8. Dispositif selon l'une ou l'autre des revendications 6 et 7, caractérisé en ce que pour piloter le générateur de synchronisation (550), il est prévu un comparateur de phase (40) et un oscillateur (850) à tension commandée.

9. Dispositif selon l'une quelconque des revendications 1 à 8, caractérisé en ce qu'il est prévu, pour chaque canal et ainsi pour chaque image partielle de l'image de source stéréo, au moins deux unités à mémoire (301, 302 ; 305, 306) dans lesquelles les données d'image peuvent être mémorisées temporairement avec sélection selon le canal.

10. Dispositif selon la revendication 9, caractérisé en ce qu'il est prévu pour chaque canal encore au moins une troisième unité à mémoire (303, 307) en tant que mémoire temporaire pour l'opération de lecture qui s'effectue de façon asynchrone.

11. Dispositif selon l'une ou l'autre des revendications 9 et 10, caractérisé en ce que les sorties des unités à mémoire (301 à 307) sont regroupées.

12. Dispositif selon l'une quelconque des revendications 9 à 11, caractérisé en ce qu'un multiplicateur de lignes est agencé à la suite des unités à mémoire (301 à 307).

13. Dispositif selon l'une quelconque des revendications 9 à 12, caractérisé en ce qu'il est prévu en amont des unités à mémoire (301 à 307), de préférence avec sélection selon le canal, un étage de synchronisation respectif séparé (320, 330) qui peut être connecté via un bus à un ordinateur hôte et être piloté par celui-ci.
